# EUROPEAN PATENT APPLICATION

(11) **EP 4 563 957 A1**
(43) Date of publication of application: **04.06.2025**
(21) Application number: 24215752.7
(22) Date of filing: 27.11.2024
(51) Int. Cl.: G01K 1/143, G01K 7/16, H01M 10/48, H01M 10/613, H01M 10/615, H01M 10/625, G01K 1/02, H01M 10/63, H01M 10/633, H01M 10/6572

(54) **A THERMAL MANAGEMENT FILM FOR DETECTING AND/OR FOR REGULATING A TEMPERATURE OF AN ELECTRICAL DEVICE**

(30) Priority: 30.11.2023 EP 23213221
(71) Applicant: Volvo Truck Corporation, 405 08 Göteborg (SE)
(72) Inventor: Tintignac, Sophie, 418 71 Göteborg (SE); Choi, YoungJin, 421 73 Västra Frölunda (SE); Ahmed, Istaq, 422 44 Göteborg (SE)
(74) Representative: Valea AB

(57) **Abstract**

The present disclosure relates to a thermal management film (200) for detecting and/or for regulating a temperature of an electrical device comprising at least one surface. Thermal management film (200) is arranged to be abutted against the surface of the electrical device. The thermal management film (200) comprises:
- a substrate (201),
- a temperature sensing arrangement (210) arranged on the substrate (201) and configured to detect a temperature associated parameter at one or more areas on the film (200), and
- a temperature regulating arrangement (220) arranged on the substrate (201) and configured to regulate the temperature distribution across the film (200) by selectively generating heat at one or more areas of said film (200) and/or by selectively generating (a) cooling flux(es) at one or more areas of said film (200).

## Description

### TECHNICAL FIELD

The disclosure relates generally to a thermal management film. In particular aspects, the disclosure relates to a thermal management film for detecting and/or for regulating a temperature of an electrical device. The disclosure also relates to a computer-implemented method of regulating a temperature of an electrical device by means of the thermal management film. Furthermore, a battery module, a battery system comprising the thermal management film, and a vehicle are also provided. The battery module and/or the battery system may be installed in vehicles, which can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Monitoring of operating parameters of an electrical device, such as monitoring a temperature of a battery module, is important for enhancing safety, optimizing performance, and ensuring a prolonged lifespan of the battery module. It may allow for early fault detection, enable proactive implementation of preventive measures, and provide an input on the overall health of the battery module.

Various solutions exist for assessing the overall health of battery modules. For example, temperature sensors are commonly employed to monitor the temperature of battery cells. Typically, the temperature sensors are placed on the top plate or positive/negative terminals of the battery cells due to limited spaces in a battery module. However, to be able to obtain comprehensive temperature information in the battery module, multiple temperature sensors are needed to be placed at different locations in the battery module, which may be costly and space consuming. Furthermore, a thermal management system is usually required to regulate the temperature in response to the detected temperature. Such a thermal management system typically comprises various thermal management components, e.g., cooling components, that are installed separately from a temperature detecting system, which may be costly and space consuming.

Therefore, there is a strive to develop improved technology for detecting operating parameters of an electrical device.

### SUMMARY

According to a first aspect of the disclosure, a thermal management film for detecting and/or for regulating a temperature of an electrical device comprising at least one surface according to claim 1 is provided. The thermal management film is arranged to be abutted against the at least one surface of the electrical device.
The thermal management film comprises:
- a substrate,
- a temperature sensing arrangement arranged on the substrate and configured to detect a temperature associated parameter at one or more areas on the thermal management film, and
- a temperature regulating arrangement arranged on the substrate and configured to regulate the temperature distribution across the thermal management film by selectively generating heat at one or more areas of the thermal management film and/or by selectively generating (a) cooling flux(es) at one or more areas of the thermal management film.

The first aspect of the disclosure may seek to improve efficiency and reduce complexity associated with monitoring and regulating temperature of an electrical device. A technical benefit may include that it may regulate the temperature across the surface of the electrical device in a more space-efficient and cost-efficient manner, as it may eliminate the need of deploying multiple temperature sensors and multiple temperature regulating components.

The technical benefit is achieved by incorporating the temperature sensing arrangement and the temperature regulating arrangement into a single film. When the film is abutted against the surface of the electrical device, the temperature sensing arrangement is configured to detect a temperature associated parameter at one or more areas on the thermal management film. As such, a temperature distribution profile across the entire film may be obtained, which, in turn, may reflect the temperature distribution profile across the mirroring surface of the electrical device. Based on the result of the detected temperature, the temperature regulating arrangement may selectively generate heat at one or more areas of the thermal management film and/or selectively generate (a) cooling flux(es) at one or more areas of the thermal management film, thereby regulating the temperature at the mirroring surface of the electric device. In this way, it may be possible to identify localized temperature associated issues at the electrical device and perform necessary temperature regulation actions by use of a single film.

Optionally in some examples, including in at least one preferred example, the temperature sensing arrangement comprises at least one sensing element formed by at least one material that has a temperature dependent material property and a plurality of monitoring circuits, arranged at predefined monitoring positions that are spaced apart from each other over the substrate, wherein the monitoring circuits are configured to monitor the parameter associated with the temperature dependent material property of the material at each monitoring position, such that temperature information at each monitoring position is obtained.

The parameter associated with the temperature dependent material property may generally increase or decrease with an increased/decreased temperature. Thanks to this material property, it may be possible to assess the temperature changes at local monitoring positions, and thereby to obtain a temperature distribution profile across the entire thermal management film, which, in turn, may reflect the temperature distribution profile across the mirroring surface of the electric device when the film is abutted against the surface of the electrical device.

The monitoring positions may vary in terms of distribution. In some examples, these monitoring positions may be evenly distributed, spaced to cover the substrate uniformly. The even distribution may ensure that each area of the substrate receives consistent monitoring, which can be advantageous for applications requiring uniform data collection or when maintaining an equilibrium across the electrical device is crucial. In some other examples, the monitoring positions may be unevenly distributed, which may serve purposes such as focusing monitoring on particular areas of interest.

Optionally in some examples, including in at least one preferred example, the parameter associated with the temperature dependent material property comprises a temperature dependent electrical resistance, a temperature dependent pressure and/or a temperature dependent voltage.

Optionally in some examples, including in at least one preferred example, the sensing elements are formed by applying the material onto the substrate, positioned at the predefined monitoring positions. In this way, individual sensing elements are less susceptible to interference from neighboring regions. A technical benefit may include improved accuracy in detecting parameters in the local area.

The material may be applied onto the substrate by any suitable technologies. Purely by way of examples, the material may be printed onto the substrate. In some other examples, techniques such as electrodeposition, vapor deposition and/ or chemical deposition may be employed.

Optionally in some examples, including in at least one preferred example, each sensing element formed by the material has a predefined shape with a predefined dimension. Different electrical devices may vary in size and/or shape, depending on the intended applications. By allowing the shape and dimension of each sensing element to vary, the thermal management film may adapt to the specific characteristics of different electrical devices. Furthermore, to accurately monitor changes in temperature of the electrical device, it may be crucial that the sensing elements fit precisely within the designated monitoring positions. Having defined shapes and dimensions may ensure a consistent and precise fit. A technical benefit may include that improved adaptability, and improved precision in monitoring is achieved.

Optionally in some examples, including in at least one preferred example, the material comprises at least one of a carbon-based material, a ceramic material, or a metal-based material. These materials may generally exhibit a relatively linear relationship between the parameters, e.g., electrical resistance and temperature over a certain temperature range, which may simplify the conversion to the temperature. Furthermore, these materials are generally robust and resistant to mechanical stress and vibration, which may withstand harsh operating conditions. This may be beneficial for applications of the electrical devices that are installed, for instance, in vehicles. A technical benefit may include improved robustness in operating temperature sensing.

Optionally in some examples, including in at least one preferred example, the carbon-based material comprises graphene. Generally, graphene offers high thermal conductivity and is sensitive to temperature changes. A technical benefit may include improved efficiency in temperature detection.

Optionally in some examples, including in at least one preferred example, the temperature regulating arrangement is configured to selectively heat or cool one or more areas of the film based on the obtained temperature information, such that the temperature across the thermal management film is homogenized. In this way, temperature across the mirroring surface of the electric device is homogenized. As such, temperature variations, which may accelerate the degradation of the electrical device, may be avoided. A technical benefit may include that a prolonged lifespan of the electrical device may be achieved.

Optionally in some examples, including in at least one preferred example, the temperature regulating element comprises a plurality of resistive heating elements arranged at each monitoring position, the resistive heating elements being configured to generate heat at one or more areas of the film by applying electrical currents to pass through the resistive heating elements. Resistive heating elements are generally thin and lightweight, which may contribute to the overall slimness and lightness of the thermal management film. A technical benefit may include that a space-efficient and weight-efficient thermal management film is achieved. Furthermore, by arranging the resistive heating elements at each monitoring position, it may allow precise regulation of the temperature across the thermal management film.

Optionally in some examples, including in at least one preferred example, the resistive heating elements are formed by resistive circuits utilizing the plurality of monitoring circuits. In other words, components of the monitoring circuits, e.g., electrical wires, may be used as resistive heating elements. This may eliminate the need for dedicated resistive heating elements and in this way, less components may be applied onto the thermal management film. A technical benefit may include a reduced complexity of arrangement over the substrate of the thermal management film.

Optionally in some examples, including in at least one preferred example, the temperature regulating element further comprises a plurality of thermoelectric elements arranged at each monitoring position, the thermoelectric elements being configured to generate (a) cooling flux(es) at one or more areas of the film by applying electrical currents to pass through the thermoelectric elements. By arranging the thermoelectric elements at each monitoring position, it may allow precise regulation of the temperature across the thermal management film. A technical benefit may include that precise control of the temperature is achieved.

Optionally in some examples, including in at least one preferred example, the plurality of the thermoelectric elements is connectable to the plurality of resistive heating elements. The thermoelectric elements are adapted to be connected to one or more selected resistive heating elements when electrical currents are generated through Seebeck effect, such that the electric currents are transferred to the one or more selected resistive heating elements. For instance, the resistive heating elements located at areas where the temperature falls below a predetermined temperature lower threshold may be selected, and the generated electrical currents may be transferred to these selected resistive heating elements, providing power to the selected heating elements to heat these areas. In these examples, switches or diodes may be arranged on the thermal management film to control, e.g., enable or disable, the connection between the thermoelectric elements and the resistive heating elements. A technical benefit may include improved energy efficiency.

Optionally in some examples, including in at least one preferred example, the substrate is formed by a polymer-based material. Purely by way of example, the polymer-based material may be one of, or a combination of, polyethylene terephthalate, polydimethylsiloxane, or polyimide. As such, the thermal management film may easily conform to the contours and shapes of different electrical devices due to the factor that polymer materials may have flexibility and pliability. This flexibility may allow the film to adhere to the surface of the electrical device, ensuring maximum contact and coverage and maintaining consistent contact across the surface, thereby to optimize the effectiveness of temperature detection and/or regulation. A technical benefit may include that an improved effectiveness of temperature detection and/or regulation is achieved.

Optionally in some examples, including in at least one preferred example, the substrate has a thickness, such as a maximum thickness, less than 1 mm. As such, the thermal management film may have an ultra-thin profile, which may allow the film to be used in electrical devices with limited space.

According to a second aspect of the disclosure, a battery cell according to claim 9 is provided. The battery cell comprises:
- an electrode stack comprising at least one surface,
- a battery casing assembly enclosing the electrode stack, and
- the thermal management film according to any example of the first aspect of the disclosure,
- wherein the thermal management film is arranged to be abutted against the at least one surface of the electrode stack.

In some examples, the electrode stack may be configured as a jelly-roll, in a sandwich pattern or in a zig-zag pattern. By arranging the thermal management film to be abutted against the electrode stack's surface, it may ensure direct contact with the surface where heat and temperature gradients are generated during battery cell operation. The direct contact may allow temperature regulation to be applied precisely to the local areas. A technical benefit may include improved accuracy in temperature detection and effectiveness in temperature management.

Optionally in some examples, including in at least one preferred example, the thermal management film further comprises a connection portion in which the output ends of the plurality of the monitoring circuits are arranged. The battery casing assembly comprises a battery cap having an opening through which the connection portion can be accessed. As mentioned before, the monitoring circuits are configured to monitor the parameter associated with the temperature dependent material property of the material at each monitoring position. For instance, the monitoring circuits may measure the parameters of the sensing elements and convert the measured parameter into a digital signal or data. This may enable the monitoring circuits to be connected to any data processing units externally to the battery cell, allowing efficient data transfer without the need to dismantle the battery casing.

According to a third aspect of the disclosure, a battery system according to claim 10 is provided. The battery system comprises:
- a battery cell according to the second aspect of the present disclosure,
- a battery management unit configured to monitor a temperature distribution across the at least one surface of the at least one battery cell by use of information related to the temperature associated parameter detected by the thermal management film,
- wherein the battery management unit comprises processing circuitry communicatively connectable to the output ends of the monitoring circuits

Herein the battery management unit may be understood as a computer system comprising processing circuitry. When the processing circuitry is communicatively connected to the output ends of the monitoring circuits, it may obtain the temperature associated parameter data from the monitoring circuits for analysis. , In some examples, the processing circuitry may convert the detected parameter to temperature values.

The thermal management film may be exemplified by any of the above-described examples of the first aspect. Thus, further advantages and advantageous features of the battery cell and the battery system appear from the above description of the thermal management film.

Optionally in some examples, including in at least one preferred example, the temperature regulating element of the thermal management film comprises a plurality of resistive heating elements arranged at each monitoring position. In these examples, the battery system further comprises a power source configured to provide (an) electrical current(s) to pass through one or more resistive heating elements, such that the heat is generated at one or more areas of the film. Each one of the resistive heating elements comprises an input end and an output end, arranged at the connection portion of the thermal management film, wherein the power source is electrically connectable to the input and output ends of the resistive heating element. When the electrical connection is enabled, the power may be properly supplied to the resistive heating elements.

The generated heat may then be transferred to mirroring area(s) at the at least one surface of the at least one battery cell. Herein the battery management unit may be configured to control the power source to provide electrical currents to pass through the correct resistive heating elements at appropriate instances, for instance, by controlling the power source to be connected to the input and output ends of the resistive heating elements located at areas with the temperature falling below a predetermined temperature lower threshold. A technical benefit may include that a precise control of temperature may be achieved.

Optionally in some examples, including in at least one preferred example, the temperature regulating element of the thermal management film comprises a plurality of thermoelectric elements arranged at each monitoring position. In these examples, the battery system further comprises a power source configured to provide electrical currents to pass through one or more thermoelectric elements, such that (a) cooling flux(es) is/are generated at one or more areas of the film. Each one of the thermoelectric elements comprises an input end and an output end, arranged at the connection portion of the thermal management film, wherein the power source is electrically connectable to the input and output ends of the thermoelectric elements. When the electrical connection is enabled, the power may be properly supplied to the thermoelectric elements.

The generated cooling flux(es) will be transferred to corresponding area(s) of the at least one surface of the at least one battery cell. Herein the battery management unit may be configured to control the power source to provide electrical currents to pass through the correct thermoelectric elements at appropriate instances, for instance, by controlling the power source to be connected to the input and output ends of the thermoelectric elements located at areas with the temperature exceeding a predetermined temperature upper threshold. A technical benefit may include that a precise control of temperature may be achieved.

According to a fourth aspect of the disclosure, a vehicle comprising a battery system according to the third aspect is provided.

According to a fifth aspect of the disclosure, a computer-implemented method of regulating a temperature of an electrical device by means of a thermal management film according to the first aspect of the disclosure is provided. The method comprises:
- detecting, by processing circuitry of a computer system, a temperature distribution across the film,
- regulating, by processing circuitry of the computer system, the temperature of one or more area of the surface of the electrical device by generating heat at one or more area of the film and/or by generating (a) cooling flux(es) at one or more area of the film on the basis of the detected temperature distribution across said film.

In this way, the generated heat and/or cooling flux(es) will be transferred to the mirroring areas on the surface of the electrical device.

The thermal management film may be exemplified by any of the above-described examples of the first aspect. Thus, further advantages and advantageous features of the method appear from the above description of the thermal management film.

Optionally in some examples, including in at least one preferred example, the temperature sensing arrangement comprises at least one sensing element formed by at least one material that has a temperature dependent material property and a plurality of monitoring circuits, arranged at predefined monitoring positions that are spaced apart from each other over the substrate. The method further comprises:
- monitoring, by the processing circuitry, a parameter associated with the temperature dependent material property at each monitoring position, such that temperature information at each monitoring position is obtained.

Optionally in some examples, including in at least one preferred example, the temperature regulating element comprises a plurality of resistive heating elements arranged at each monitoring position, and wherein the method further comprises:
- in response to the obtained temperature(s) at one or more monitoring positions being lower than a threshold level, applying, by the processing circuitry, (an) electrical current(s) to pass through one or more resistive heating elements at the monitoring positions, such that heat is generated at the monitoring position(s).

In this way, the generated heat will be transferred to the corresponding area(s) of the surface of the electrical device that may require heating.

Optionally in some examples, including in at least one preferred example, the temperature regulating element further comprises a plurality of thermoelectric elements arranged at each monitoring position. The method further comprises:
- in response to the obtained temperature (s) at one or more monitoring positions being higher than a threshold level, applying, by the processing circuitry, (an) electrical current(s) to pass through one or more thermoelectric elements at the monitoring position.

In this way, the generated heat will be transferred to the corresponding area(s) of the surface of the electrical device that may require heating.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary thermal management film of the present disclosure, according to an example.
**FIGS. 1a-1d**show enlarged side views of the thermal management film, according to some other examples of the present disclosure.
**FIG 2a'** shows a battery cell with a thermal management film.
**FIG 2b'** shows an additional view of the thermal management film used in the battery cell of FIG 2a'.
**FIG 2c'** shows a battery system according to an example.

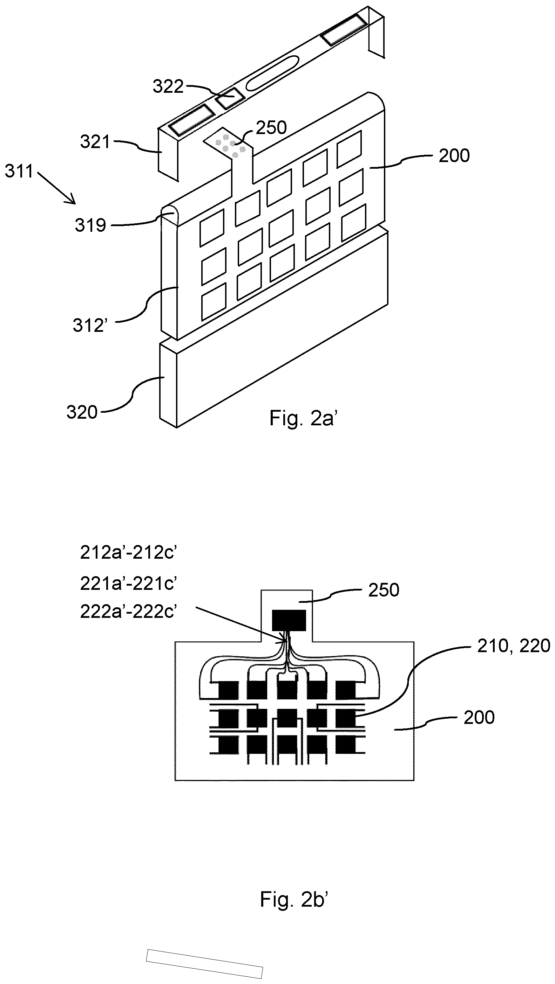

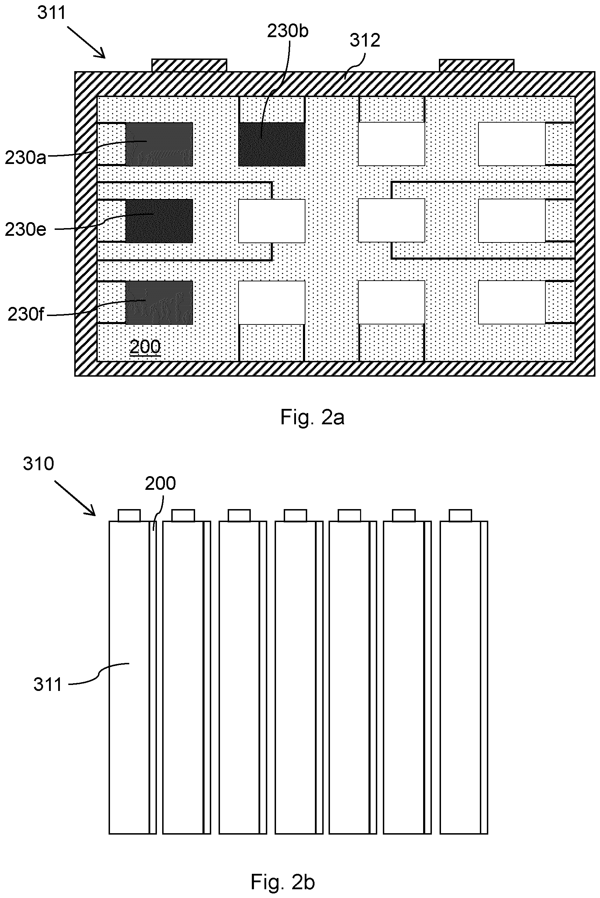

**FIG. 2a** is another battery cell comprising a thermal management film according to another example.
**FIG. 2b** is a battery module comprising a plurality of battery cells of FIG. 2a.

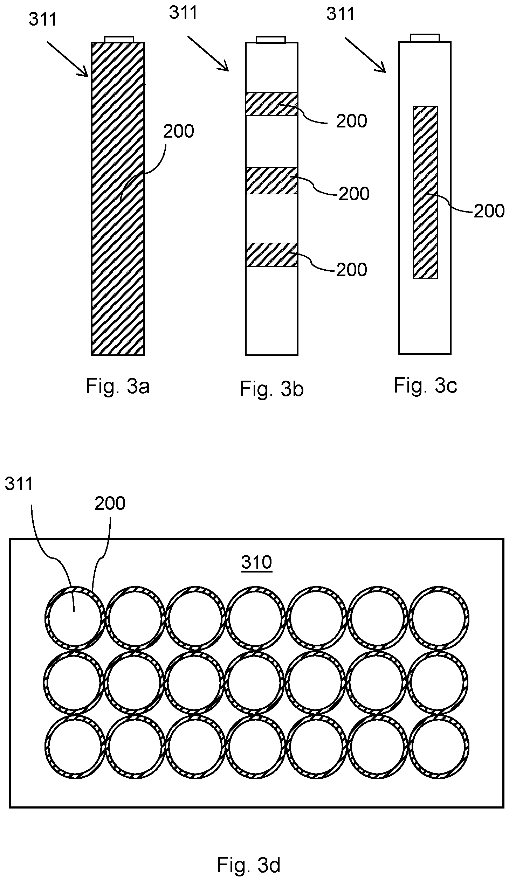

**FIGS. 3a-3c** show yet another battery cell comprising one or more thermal management film according to another example.
**FIG. 3d** is a battery module comprising a plurality of battery cells of **FIG. 3a****,.**

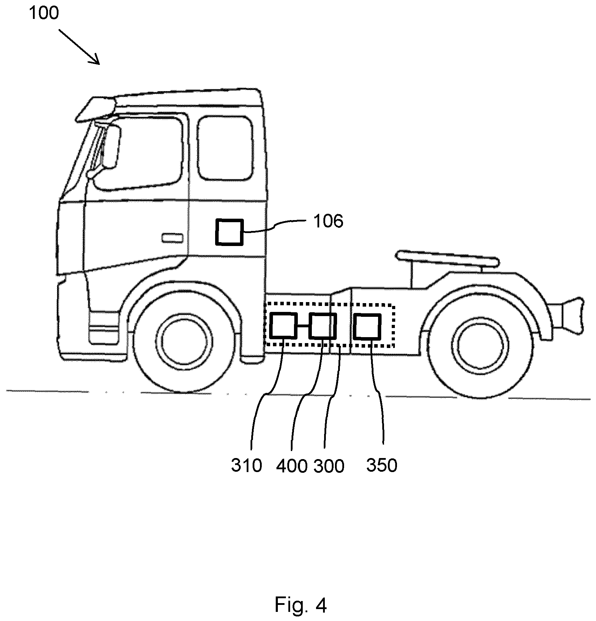

**FIG. 4** is a vehicle, in the form of a truck, comprising a battery system and a battery module, according to an example.

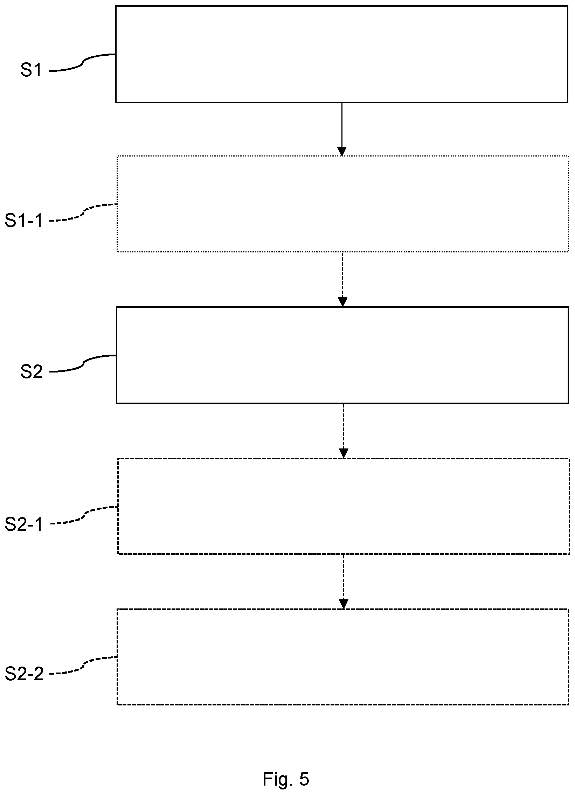

**FIG. 5** is a flow-chart illustrating a method for detecting and/or regulating temperature of an electrical device by use of a thermal management film.

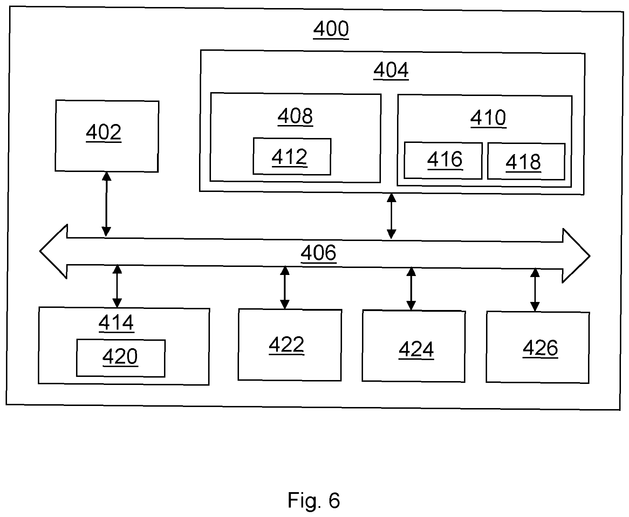

**FIG. 6** is a schematic diagram of an exemplary computer system for implementing examples disclosed herein, in accordance with an example of the present disclosure.

The drawings show diagrammatic, exemplifying examples of the present disclosure and are thus not necessarily drawn to scale. It shall be understood that the examples shown and described are exemplifying and that the disclosure is not limited to these examples. It shall also be noted that some details in the drawings may be exaggerated in order to better describe and illustrate the disclosure. Like reference characters refer to like elements throughout the description, unless expressed otherwise.

### DETAILED DESCRIPTION

Monitoring of operating parameters of an electrical device, such as temperature of a battery module, is important for enhancing safety, optimizing performance, and ensuring a prolonged lifespan of the battery module. It may allow for early fault detection, enable proactive implementation of preventive measures, and provide an input on the overall health of the battery module.

Various solutions exist for assessing the overall health of battery modules. For example, temperature sensors are commonly employed to monitor the temperature of battery cells. Typically, the temperature sensors are placed on the top plate or positive/negative terminals of the battery cells due to limited spaces in a battery module. However, to be able to obtain comprehensive temperature information in the battery module, multiple temperature sensors are needed to be placed at different locations in the battery module, which is neither cost-efficient nor space-efficient. Furthermore, a thermal management system is usually required to regulate the temperature in response to the detected temperature. Such a thermal management system typically comprises various thermal management components, e.g., cooling components that are installed separately from a temperature detecting system, which is neither cost-efficient nor space-efficient.

The present disclosure may seek to improve efficiency and reduce complexity associated with monitoring and regulating temperature of an electrical device, such as a battery cell or a battery module. A technical benefit may include that it may regulate the temperature across the surface of the electrical device in a more space-efficient and cost-efficient manner, as it may eliminate the need of deploying multiple temperature sensors and multiple temperature regulating components.

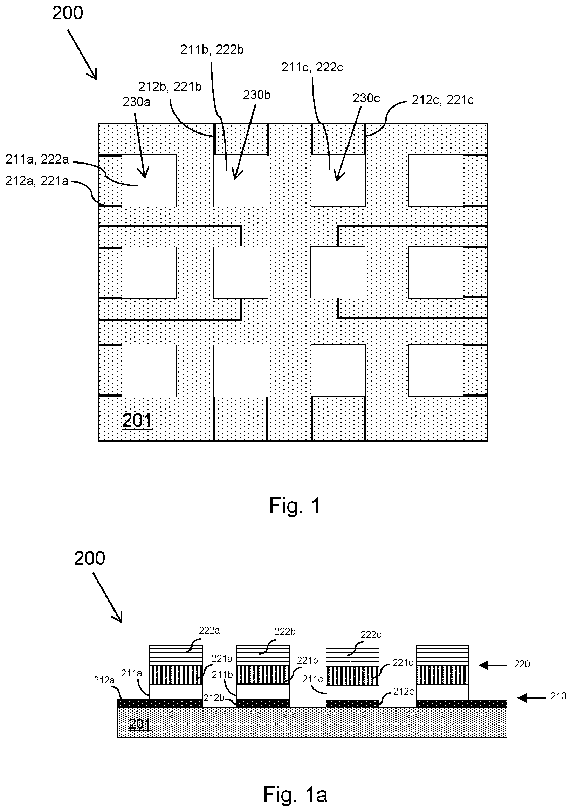

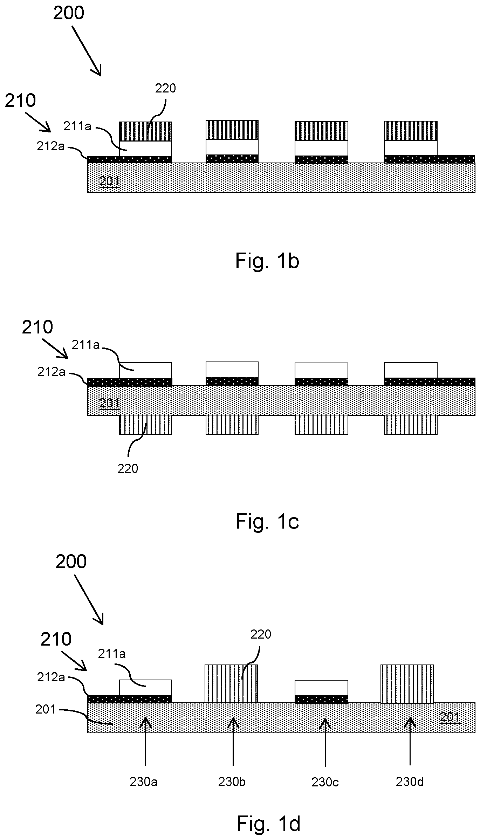

**FIG. 1** is a schematic top view of a thermal management film 200 and **FIGS. 1a-****1d** show various examples of an enlarged side view of the thermal management film200.

The thermal management film 200 comprises a substrate 201, where a temperature sensing arrangement 210 and a temperature regulating arrangement 220 are arranged on the substrate 201, respectively. The substrate 201 may be formed by a polymer-based material, which may exhibit high adaptability to various electrical devices' contours and shapes thanks to the flexibility and pliability of polymer materials. Purely by way of example, the polymer-based material may be one of, or a combination of, polyethylene terephthalate, polydimethylsiloxane, or polyimide. Moreover, the substrate 201 may have a thickness less than 1mm, which may allow the film to be appliable for ultra-thin applications. A plurality of monitoring positions 230a-230c are predefined on the substrate 201, which are spaced apart from each other and are distributed evenly over the substrate 201. While the illustration depicts these monitoring positions 230a-230c distributed evenly across the substrate 201, it is conceivable that these monitoring positions 230a-230c may have an uneven distribution depending on the specific area of interest.

In the illustrated example, the temperature sensing arrangement 210 comprises a plurality of sensing elements 211a-211c and monitoring circuits 212a-212c, and they are arranged at the predefined monitoring positions 230a-230c. Each sensing element 211a-211c has a square shape with a defined dimension, which may vary depending on the application of the electrical device. While a square shape is depicted in the figure, it shall be noted that the shape and the dimension of the sensing elements 211a-211c and the monitoring circuits 212a-212c should not be limited to the shown shape and/or shown arrangement. Furthermore, depending on the application of the electrical device, coverage of the area to be sensed by one of these elements may vary, depending on the specific application of the electrical device, either encompassing the entire area or a portion of it. These sensing elements 211a-211c are formed by at least one material that has a temperature dependent material property. Purely by way of example, the material comprises at least one of a carbon-based material, such as graphene-based material. Alternatively, the material may comprise a ceramic material, and/or a metal-based material. The material may be applied onto the substrate 201 using any suitable technologies. For instance, the material may be printed onto the substrate. In some other examples, techniques such as electrodeposition, vapor deposition and/ or chemical deposition may be employed.

As mentioned above, the material may have a temperature dependent material property, which may generally increase or decrease in response to change of temperature. Purely by way of example, the temperature dependent material property may be an electrical resistance of the material, a pressure of the material and/or a voltage of the material. The monitoring circuits 212a-212c are arranged to detect the temperature associated parameter. In this way, temperature information at each monitoring position at each local monitoring position 230a-230c can be obtained. When the thermal management film 200 is abutted against a surface of an electrical device, the obtained temperature information at each monitoring position may reflect a temperature at the mirroring locations of the surface of the electrical device, and thus a temperature distribution profile across the surface of the electrical device may be obtained.

Based on the obtained temperature information, the temperature regulating arrangement 220 may regulate the temperature distribution across the thermal management film 200 by selectively generating heat at one or more areas of the thermal management film 200 and/or by selectively generating (a) cooling flux(es) at one or more areas of thermal management film 200. The generated heat and/or cooling flux(es) may then be transferred to the mirroring areas of the surface of the electrical device that may require heating and/or cooling. In this way, the temperature across the surface of the electrical device may be homogenized. It shall be noted that depending on the application of the electrical device, a controlled temperature gradient may be preferred in some examples. In these cases, it may be possible to regulate the temperature distribution across the thermal management film 200 and/or the surface of the electrical device such that a target temperature gradient is achieved.

The temperature regulating arrangement 220 comprises a plurality of resistive heating elements 221a-221c and thermoelectric elements 222a-222c. In the illustrated example shown in **FIG. 1****,** the resistive heating elements 221a-221c are formed by resistive circuits utilizing the plurality of the monitoring circuits 212a-212c. When necessary, electrical currents are applied to pass through the electrical wires of the monitoring circuits 212a-212c such that heat is generated at the monitoring positions 230a-230c. Furthermore, the thermoelectric elements 222a-222c are arranged at the monitoring positions 230a-230c, which may appear to overlap with the sensing elements 211a-211c when viewed from top, as illustrated in **FIG. 1****.** When necessary, electrical currents are applied to pass through the thermoelectric elements 222a-222c such that cooling fluxes are generated at the position 230a-230c.

In some other examples, the heating elements 221a-221c, the thermoelectric elements 222a-222c, the sensing elements 211a-211c and the monitoring circuits 212a-212c are arranged on the same side of the substrate 201, across different layers, as illustrated in FIG. 1a. In some other examples, the heating elements 221a-221c and the thermoelectric elements 222a-222c may be arranged on the same layer. FIG. 1b shows an example where the aforementioned elements are arranged on the same side of the substrate 201, while FIG. 1c illustrates an example where the temperature sensing arrangement 210 (e.g., the sensing elements 211a-211c and the monitoring circuits 212a-212c ) and the temperature regulating arrangement 220 (e.g., the thermoelectric elements 222a-222c and the sensing elements 211a-211c) are arranged at the opposite sides of the substrate 201. Notably, in the depicted examples of FIGS.1a-1c, the temperature sensing arrangement 210 and the temperature regulating arrangement 220 are arranged in the same position, while FIG. 1d, shows an example where the temperature sensing arrangement 210 (e.g., the sensing elements 211a-211c and the monitoring circuits 212a-212c) and the temperature regulating arrangement 220 are placed in adjacent positions 230a-230d. In the example of FIG. 1d, only position 230a and position 230c are predefined as monitoring positions. Irrespective of the positions of the heating elements 221a-221c, the thermoelectric elements 222a-222c, the sensing elements 211a-211c and the monitoring circuits 212a-212c, the thermal management film 200 may also comprise one or more insulation layers (not shown) which may partly or fully cover these elements. Alternatively, the one or more insulation layers (not shown) may be interposed between these components. The one or more insulation layers may be made from any suitable material, such as epoxy, parylene, oxide or ceramic.

In some examples, the thermoelectric elements 222a-222c are connectable to the plurality of resistive heating elements 221a-221c, whereby the thermoelectric elements 222a-222c are adapted to be connected to one or more selected resistive heating elements 221a-221c when electrical currents are generated through Seebeck effect, such that the electric currents are transferred to the one or more selected resistive heating elements 221a-221c. The resistive heating elements 221a-221c located at areas where the temperature falls below a predetermined temperature lower threshold may be selected. The generated electrical currents may be transferred to these selected resistive heating elements, providing power to the selected heating elements to heat these areas. In these examples, switches or diodes (not shown) may be arranged on the thermal management film 200 to control, e.g., enable and disable, the connection between the thermoelectric elements 222a-222c and the resistive heating elements 221a-221c.

In some examples, the electrical device is a battery cell FIG. 2a' shows a battery cell 311 exemplified by a prismatic cell. The battery cell 311 comprises an electrode stack 319 comprising at least one surface 312', e.g., an outer surface, and a battery casing assembly 320 enclosing the electrode stack 319. By way of example, the electrode stack may be configured as a jelly-roll, in a sandwich pattern or in a zig-zag pattern. Accordingly, the at least one surface may not necessarily be a surface facing an inside of the battery casing, but may in some examples additionally or alternatively be a surface which is facing another portion of the surface of the electrode stack. During operation of the battery cell 311, heat and temperature gradients may occur on the surface 312' of the electrode stack 319. The battery cell 311 further comprises a thermal management film 200 arranged to be abutted against the surface 312' of the electrode stack 319. This may allow the thermal management film 200 to make direct contact with the surface 312', enabling more precise temperature monitoring and management of local areas of the surface 312'. **FIG 2b'** provides an additional view of the thermal management film 200 used in the battery cell 311. As shown, in addition to the temperature sensing arrangement 210 and the temperature regulating arrangement 220, the thermal management film 200 further comprises a connection portion 250 in which the output ends 230a'-230c' of the plurality of the monitoring circuits 212a-212c are arranged. Moreover, the battery casing assembly 320 comprises a battery cap 321, as despite **FIG. 2a'****,** having an opening 322 through which the connection portion 250 can be accessed. In this way, the output ends 230a'-230c' may be communicatively connected to any data processing units, externally to the battery cell 311. Moreover, as described before, the thermal management film 200 comprises a temperature regulating arrangement 220 which may in turn comprise a plurality of resistive heating elements 221a-221c and thermoelectric elements 222a-222c. In some examples, each one of the resistive heating elements 221a-221c comprises an input end 221a'-221c' and an output end 221a'-221c', arranged at the connection portion 250 of the thermal management film 200. Additionally, each one of the thermoelectric elements 222a-222c may comprise an input end 222a'-222c' and an output end 222a'-222c', arranged at the connection portion 250 of the thermal management film 200. In this way, the input and output ends of the resistive heating elements 221a-221c and the thermoelectric elements 222a-222c may be connected to any suitable power source, externally to the battery cell 311. It shall be noted that the opening 322 may be provided with proper sealing.

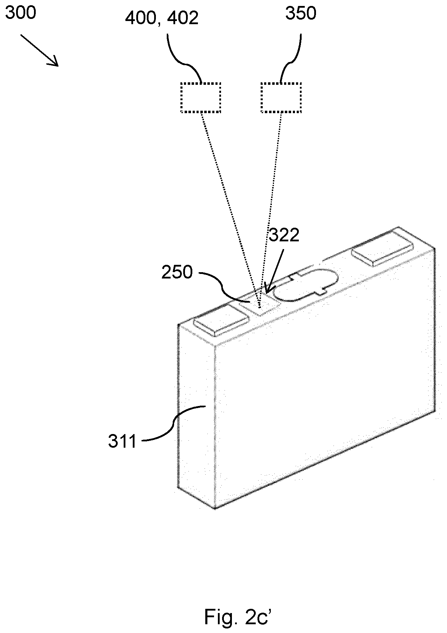

**FIG 2c'** shows a battery system 300 according to an example. The battery system comprises at least one battery cell 311, such as the **FIG. 2a'** battery cell 311. The battery system 300 further comprises a battery management unit 400 configured to monitor a temperature distribution across the at least one surface 312', such as the surface 312' of the electrode stack 319 of the battery cell 311, by use of information related to the temperature associated parameter detected by the thermal management film 200. The battery management unit 400 may comprise processing circuitry 402 communicatively connectable to the output ends 212a'-212c' of the monitoring circuits 212a-212c on the connection portion 250 of the thermal management film 200. When the processing circuitry 402 is communicatively connected to the output ends 212'-212', the information related to the temperature associated parameter may be obtained. Moreover, the battery system 300 comprises a power source 350 that is electrically connectable to the input and output ends 221a'-221c' of the resistive heating element 221a-221c on the connection portion 250 of the thermal management film 200. The processing circuitry 402 may control the power source 350 to be connected to the input and output ends of the resistive heating elements located at areas with the temperature falling below a predetermined temperature lower threshold. Additionally, the power source 350 may be electrically connectable to the input and output ends 222a'-222c' of the thermoelectric elements 222a-222c on the connection portion 250 of the thermal management film 200. The processing circuitry 402 may control the power source 350 to be connected to the input and output ends of the thermoelectric elements located at areas with the temperature exceeding a predetermined temperature upper threshold. This temperature information at local areas may be obtained by use of the information from the monitoring circuits 212a-212c as described previously. In these examples, switches or diodes (not shown) may be arranged on the thermal management film 200 to control, e.g., enable and disable, the connection between the power source 350 and each one of the input and output ends 221a'-221c' of the resistive heating element 221a-221c, and between the power source 350 and each one of the input and output ends 222a'-222c' of the thermoelectric elements 222a-222c .

Although a prismatic battery cell 311 is shown as an example, the thermal management film 200 may be used in any other types of battery cell, such as a cylindrical battery cell.

Moreover, the thermal management film 200 may be arranged to be abutted against an outer surface of a battery cell, such as a surface of a battery casing. **FIG. 2a** shows an example of a prismatic battery cell 311 comprising a thermal management film 200. The prismatic battery cell 311 comprises a surface 312 against which the thermal management film 200 is abutted. **FIG. 2a** further shows a distribution of hotspots at local locations 230a, 230b, 230e, 230f on the thermal management film 200, which may indicate a distribution of the hotspots on the mirroring locations of the surface 312 of the battery cell 311. The temperature regulating arrangement 220 may selectively generate cooling fluxes at these local locations 230a, 230b, 230e, 230f on the thermal management film 200, and the cooling fluxes may then be transferred to the hotspots on the surface 312 of the battery cell 311. **FIG. 2b** illustrates a battery module 310 where battery cells 311 are stacked adjacent to one another in a side-by-side configuration, and the thermal management film 200 is sandwiched between the adjacent battery cells 311. With this configuration, it may enable continuous monitoring of temperature levels at local areas on the surface 312 of each individual battery cell 311 and may allow for temperature regulation when needed.

**FIGS. 3a-3c** show sides view of another example of a battery cell 311 which is exemplified by a cylindrical battery cell. The outer surface (not shown) of the battery cell 311 may be fully covered by the thermal management film 200, as shown in FIG. 3a. In some other examples, the thermal management film 200 may be manufactured in various sizes and be affixed to different position(s) on the outer surface of the battery cell 311 as needed. **FIG. 3c** shows a top view of a battery module 310 comprising the plurality of battery cells 311 of **FIG 3a****.** In the illustrated example, the cylindrical battery cells 311 are stacked adjacent to one another in a side-by-side configuration, where each battery cell 311 is provided with one thermal management film 200. With this configuration, it may enable the continuous monitoring of temperature levels at local areas on the surface 312 of each individual battery cell 311 and may allow for temperature regulation when needed.

Irrespective of the battery cell 311 being prismatic or cylindrical, the battery module 310 may be comprised in a battery system 300. The battery system 300 may be installed in vehicles, such as a truck 100, as illustrated in **FIG. 4****.** The battery system 300 further comprises a battery management unit 400, which is configured to monitor a temperature distribution across the surface 312 of the battery cell 311 by use of information related to the temperature associated parameter detected by the thermal management film 200. Those of ordinary skill in the art will appreciate that any suitable devices may be provided to evaluate the detected temperature associated parameter. The battery management unit 400 may be understood as a computer system 400 which will be described in detail with reference to **FIG. 6****.** The battery system 300 may further comprise a power source 350, which is configured to provide (an) electrical current(s) to pass through one or more resistive heating elements 221a-221c, such that heat is generated at one or more areas of the thermal management film 200 and/or to provide electrical currents to pass through one or more thermoelectric elements 222a-222c, such that (a) cooling flux(es) is/are generated at one or more areas of the thermal management film 200. The battery management unit 400 may control the power source 350 to provide the electrical currents to the correct elements of the thermal management film 200 at appropriate instances.

In some examples, the thermal management film 200 can be inserted within a battery cell to monitor temperature distribution and thermally manage from inside of the battery cell, make it possible to access internal cell temperature distribution during testing for modelling purposes.

**FIG. 5** is a flow-chart illustrating a method for detecting and/or regulating temperature of an electrical device by use of a thermal management film. The method comprises the actions listed in the following, which, unless otherwise indicated, may be taken in any suitable order. The method may be performed when the thermal management film 200 is abutted against a surface of an electrical device, such as the surface 312 of the battery cell 311 shown in **FIG. 2a****.** The method is a computer-implemented method, and is performed by processing circuitry 402 of a computer system 400 as e.g. shown in **FIG. 6****.**

The method comprises:
S1: detecting a temperature distribution across the thermal management film 200.

This action may comprise the below optional action:
**S1-1:** monitoring a parameter associated with the temperature dependent material property at each monitoring position 230a-230c, such that temperature information at each monitoring position 230a-230c is obtained. In this way, it may be possible to obtain a temperature across the entire film 200, which, in turn, may reflect the temperature profile across the mirroring surface of the electrical device.

The method further comprises:
**S2:** regulating the temperature of one or more area of said surface of the electrical device by generating heat at one or more area of said film 200 and/or by generating (a) cooling flux(es) at one or more area of said film 200 on the basis of the detected temperature distribution across the thermal management film 200.

This action may comprise the below optional actions:
**S2-1:** in response to the obtained temperature(s) at one or more monitoring positions 230a-230c being lower than a threshold level, applying (an) electrical current(s) to pass through one or more resistive heating elements 221a-221c at the monitoring positions 230a-230c, such that heat is generated at the monitoring position(s) 230a-230c. In this way, the generated heat will be subsequently transferred to the corresponding area(s) of the surface of the electrical device that may require heating.
**S2-2:** in response to the obtained temperature (s) at one or more monitoring positions 230a-230c being higher than a threshold level, applying (an) electrical current(s) to pass through one or more thermoelectric elements 222a-222c at said monitoring positions 230a-230c, such that (a) cooling flux(es) is/are generated at said monitoring position(s) 230a-230c. In this way, the generated cooling fluxes will be subsequently transferred to the corresponding area(s) of the surface of the electrical device that may require cooling.

Using the electrical device of **FIG. 2a****,** where hotspots are detected at the monitoring positions 230a, 230b, 230e, 230f on the thermal management film 200 and/or on the surface 312 of the battery cell 311 as example, the battery management unit 400 may control the power source 350 to apply electrical current(s) to pass through the thermoelectric elements that are located at these positions 230a, 230b, 230e, 230f. In this way, cooling fluxes may be generated and may be transferred to the hotspots on the surface 312 of the battery cell 311.

As mentioned, the battery management unit 400 may also be seen as a computer system 400, which is illustrated in **FIG. 6****.** The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry 402 through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Moreover, the present disclosure may be exemplified by any one of the below examples and combination of examples.

Example 1: A thermal management film (200) for detecting and/or for regulating a temperature of an electrical device comprising at least one surface, the thermal management film (200) being arranged to be abutted against the at least one surface of the electrical device, the thermal management film (200) comprising:
- a substrate (201),
- a temperature sensing arrangement (210) arranged on said substrate (201) and configured to detect a temperature associated parameter across said film (200), and
- a temperature regulating arrangement (220) arranged on said substrate (201) and configured to regulate the temperature distribution across said film (200) by selectively generating heat at one or more areas of said film (200) and/or by selectively generating (a) cooling flux(es) at one or more areas of said film (200).

Example 2: The thermal management film (200) according to Example 1, wherein the temperature sensing arrangement (210) comprises at least one sensing element (211a-211c) formed by at least one material that has a temperature dependent material property and a plurality of monitoring circuits (212a-212c), arranged at predefined monitoring positions (230a-230c) that are spaced apart from each other over the substrate (201), wherein the monitoring circuits (211a-211c) are configured to monitor a parameter associated with the temperature dependent material property of the material at each monitoring position (230a-230c), such that temperature information at each monitoring position (230a-230c) is obtained.

Example 3: The thermal management film (200) according to Example 2, wherein the parameter associated with the temperature dependent material property is a temperature dependent electrical resistance, a temperature dependent pressure and/or a temperature dependent voltage.

Example 4: The thermal management film 200 according to Example 2 or 3, wherein the sensing elements (211a-211c) are formed by applying said material onto said substrate (201), positioned at the predefined monitoring positions (230a-230c).

Example 5: The thermal management film 200 according to Example 4, wherein each sensing element (211a-211c) formed by said material has a predefined shape with a predefined dimension.

Example 6: The thermal management film (200) according to any one of Examples 2-5, wherein said material comprises at least one of a carbon-based material, a ceramic material, or a metal-based material.

Example 7: The thermal management film (200) according to Example 6, wherein the carbon-based material comprises graphene.

Example 8: The thermal management film (200) according to any one of Examples 2-7, wherein the temperature regulating arrangement (220) is configured to selectively heat or cool one or more areas of said film 200 based on the obtained temperature information, such that the temperature across the thermal management film (200) is homogenized.

Example 9: The thermal management film (200) according to any one of Examples 2-8, wherein the temperature regulating arrangement (220) comprises a plurality of resistive heating elements (221a-221c) arranged at each monitoring position (230a-230c), the resistive heating elements (221a-221c) being configured to generate heat at one or more areas of said film (200) by applying an electrical current(s) to pass through the resistive heating elements (221a-221c).

Example 10: The thermal management film (200) according to Example 9, wherein the resistive heating elements (221a-221c) are formed by resistive circuits utilizing the plurality of monitoring circuits (212a-212c).

Example 11: The thermal management film (200) according to any one of Examples 2-10, wherein the temperature regulating arrangement (220) further comprises a plurality of thermoelectric elements (222a-222c) arranged at each monitoring position (230a-230c), the thermoelectric elements (222a-222c) being configured to generate (a) cooling flux(es) at one or more areas of said film 200 by applying electrical currents to pass through the thermoelectric elements (222a-222c).

Example 12: The thermal management film (200) according to any one of Examples 1-11, wherein the substrate (201) is formed by a polymer-based material.

Example 13: A battery module (310) comprising:
- at least one battery cell (311), each battery cell (311) comprising at least one surface (312), and
- a thermal management film (200) according to any one of the Examples 1-12, the thermal management film (200) being abutted against said at least one surface (312) of said at least one battery cell (311).

Example 14: A battery system (300) comprising:
- a battery module (310) according to Example 13,
- a battery management unit (400) configured to monitor a temperature distribution across said at least one surface (312) of said at least one battery cell (311) by use of information related to (a) temperature associated parameter detected by the thermal management film (200).

Example 15: The battery system (300) according to Example 14, when dependent on Example 9, further comprising:
- a power source (350) configured to provide (an) electrical current(s) to pass through one or more resistive heating elements (221a-221c), such that heat is generated at one or more areas of said film (200).

Example 16: The battery system according to any one of Examples 14-15, when dependent on Example 11, further comprising:
- a power source (350) configured to provide electrical currents to pass through one or more thermoelectric elements (222a-222c), such that (a) cooling flux(es) is/are generated at one or more areas of said film 200.

Example 17: A vehicle (100) comprising a battery system (300) according to any one of Examples 14-16.

Example 18: A computer-implemented method of regulating a temperature of an electrical device by means of a thermal management film (200), the electrical device comprising at least one surface, the thermal management film (200) being arranged to be abutted against the at least one surface of the electrical device, the thermal management film 200 comprising:
- a substrate (201),
- a temperature sensing arrangement (210) arranged on said substrate (201) and configured to detect a temperature associated parameter at one or more areas across the film (200), and
- a temperature regulating arrangement (220) arranged on said substrate (201) and configured to regulate the temperature across said film (200) by selectively generating heat at one or more area of said film (200) and/or by selectively generating (a) cooling flux(es) at one or more area of said film (200),
the method comprising:
- detecting (S1), by processing circuitry (402) of a computer system (400), a temperature distribution across said film (200),
- regulating (S2), by processing circuitry (402) of the computer system (400), the temperature of one or more area of said surface of the electrical device by generating heat at one or more area of said film (200) and/or by generating (a) cooling flux(es) at one or more area of said film (200) on the basis of the detected temperature distribution across said film 200.

Example 19: The method according to Example 18, wherein the temperature sensing arrangement comprises at least one sensing element (211a-211c) formed by at least one material that has a temperature dependent material property and a plurality of monitoring circuits (212a-212c), arranged at predefined monitoring positions (230a-230c) that are spaced apart from each other over the substrate (201), wherein the method further comprises:
- monitoring (S1-1), by processing circuitry (402) of a computer system (400), a parameter associated with the temperature dependent material property at each monitoring position (230a-230c), such that temperature information at each monitoring position (230a-230c) is obtained.

Example 20: The method according to Example 19, wherein the temperature regulating arrangement (220) comprises a plurality of resistive heating elements (221a-221c) arranged at each monitoring position (230a-230c), and wherein the method further comprises:
- in response to the obtained temperature(s) at one or more monitoring positions (230a-230c) being lower than a threshold level, applying (S21), by the processing circuitry (402), (an) electrical current(s) to pass through one or more resistive heating elements (221a-221c) at said monitoring positions (230a-230c), such that heat is generated at said monitoring position(s) 230a-230c.

Example 21: The method according to Example 19 or Example 20, wherein the temperature regulating arrangement (220) further comprises a plurality of thermoelectric elements (222a-222c) arranged at each monitoring position (230a-230c), and wherein the method further comprises:
- in response to the obtained temperature (s) at one or more monitoring positions (230a-230c) being higher than a threshold level, applying (S2-2), by the processing circuitry (402), (an) electrical current(s) to pass through one or more thermoelectric elements (222a-222c) at said monitoring positions (230a-230c), such that (a) cooling flux(es) is/are generated at said monitoring position(s) (230a-230c).

Moreover, the present disclosure may be exemplified by any one of the below examples and combination of items:
Item1: A thermal management film (200) for detecting and/or for regulating a temperature of an electrical device comprising at least one surface, the thermal management film (200) being arranged to be abutted against the at least one surface of the electrical device, the thermal management film (200) comprising:
   - a substrate (201),
   - a temperature sensing arrangement (210) arranged on said substrate (201) and configured to detect a temperature associated parameter at one or more areas on said film (200), and
   - a temperature regulating arrangement (220) arranged on said substrate (201) and configured to regulate the temperature distribution across said film (200) by selectively generating heat at one or more areas of said film (200) and/or by selectively generating (a) cooling flux(es) at one or more areas of said film (200).
Item2: The thermal management film (200) according to Item 1, wherein the temperature sensing arrangement (210) comprises at least one sensing element (211a-211c) formed by at least one material that has a temperature dependent material property and a plurality of monitoring circuits (212a-212c), arranged at predefined monitoring positions (230a-230c) that are spaced apart from each other over the substrate (201), wherein the monitoring circuits (211a-211c) are configured to monitor a parameter associated with the temperature dependent material property of the material at each monitoring position (230a-230c), such that temperature information at each monitoring position (230a-230c) is obtained.
Item3: The thermal management film (200) according to Item 2, wherein the temperature regulating arrangement (220) comprises a plurality of resistive heating elements (221a-221c) arranged at each monitoring position (230a-230c), the resistive heating elements (221a-221c) being configured to generate heat at one or more areas of said film (200) by applying an electrical current(s) to pass through the resistive heating elements (221a-221c).
Item4: The thermal management film (200) according to Item 3, wherein the resistive heating elements (221a-221c) are formed by resistive circuits utilizing the plurality of monitoring circuits (212a-212c).
Item5: The thermal management film (200) according to any one of Items 2-4, wherein the temperature regulating arrangement (220) further comprises a plurality of thermoelectric elements (222a-222c) arranged at each monitoring position (230a-230c), the thermoelectric elements (222a-222c) being configured to generate (a) cooling flux(es) at one or more areas of said film (200) by applying electrical currents to pass through the thermoelectric elements (222a-222c).
Item6: The thermal management film (200) according to Item 5, when dependent on Items 3-4, wherein the plurality of the thermoelectric elements (222a-222c) is connectable to the plurality of resistive heating elements (221a-221c), and wherein the thermoelectric elements (222a-222c) are adapted to be connected to one or more selected resistive heating elements (221a-221c) when electrical currents are generated through Seebeck effect, such that the electric currents are transferred to the one or more selected resistive heating elements (221a-221c).
Item7: The thermal management film (200) according to any one of the preceding Items, wherein the substrate (201) is formed by a polymer-based material.
Item8: The thermal management film (200) according to any one of the preceding Items, wherein the substrate has a thickness less than 1mm.
Item9: A battery cell (311), comprising:
   - an electrode stack (319) comprising at least one surface (312')
   - a battery casing assembly (320) enclosing the electrode stack (319), and
   - the thermal management film (200) according to any one of Items 1-8,
   - wherein the thermal management film (200) is arranged to be abutted against the at least one surface (312') of the electrode stack (319).
Item10: The battery cell according to Item 9, when dependent on Item 2, wherein the thermal management film (200) further comprises a connection portion (250) in which the output ends (212a'-212c') of plurality of the monitoring circuits (212a-212c) are arranged, and wherein the battery casing assembly (320) comprises a battery cap (321) having an opening (322) through which the connection portion (250) can be accessed.
Item11: A battery system (300) comprising:
   - at least one battery cell (311) according to Item 10,
   - a battery management unit (400) configured to monitor a temperature distribution across said at least one surface (312') of said at least one battery cell (311) by use of information related to the temperature associated parameter detected by the thermal management film (200),
   - wherein the battery management unit (400) comprises processing circuitry (402) communicatively connectable to the output ends (212a'-212c') of the monitoring circuits (212a-212c).
Item12: The battery system (300) according to Item 11, when dependent on Items 3-4, the battery system (300) further comprising:
   - a power source (350) configured to provide (an) electrical current(s) to pass through one or more resistive heating elements (221a-221c), such that heat is generated at one or more areas of said film (200),
   - wherein each one of the resistive heating elements (221a-221c) comprises an input end (221a'-221c') and an output end (221a'-221c'), arranged at the connection portion (250) of the thermal management film (200),
   - wherein the power source (350) is electrically connectable to the input and output ends (221a'-221c') of the resistive heating element (221a-221c)
Item13: The battery system (300) according to any one of Items 11-12, when dependent on Item 6, the battery system (300) further comprising:
   - a power source (350) configured to provide (an) electrical current(s) to pass through one or more thermoelectric elements (222a-222c), such that (a) cooling flux(es) is/are generated at one or more areas of said film (200),
   - wherein each one of the thermoelectric elements (222a-222c) comprises an input end (222a'-222c') and an output end (222a'-222c'), arranged at the connection portion (250) of the thermal management film (200),
   - wherein the power source (350) is electrically connectable to the input and output ends (222a'-222c') of the thermoelectric elements (222a-222c)
Item14: A vehicle (100) comprising a battery system (300) according to any one of Items 11-13
Item15: A computer-implemented method of regulating a temperature of an electrical device by means of a thermal management film (200), the electrical device comprising at least one surface, the thermal management film (200) being arranged to be abutted against the at least one surface of the electrical device, the thermal management film (200) comprising:
   - a substrate (201),
   - a temperature sensing arrangement (210) arranged on said substrate (201) and configured to detect a temperature associated parameter at one or more areas on said film (200), and
   - a temperature regulating arrangement (220) arranged on said substrate (201) and configured to regulate the temperature across said film (200) by selectively generating heat at one or more area of said film (200) and/or by selectively generating (a) cooling flux(es) at one or more area of said film (200),
   the method comprising:
   - detecting (S1), by processing circuitry (402) of a computer system (400), a temperature distribution across said film (200),
   - regulating (S2), by processing circuitry (402) of the computer system (400), the temperature of one or more area of said surface of the electrical device by generating heat at one or more area of said film (200) and/or by generating (a) cooling flux(es) at one or more area of said film (200) and on the basis of the detected temperature distribution across said film (200).

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises," "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A thermal management film (200) for detecting and/or for regulating a temperature of an electrical device comprising at least one surface, the thermal management film (200) being arranged to be abutted against the at least one surface of the electrical device, the thermal management film (200) comprising:
- a substrate (201),
- a temperature sensing arrangement (210) arranged on said substrate (201) and configured to detect a temperature associated parameter at one or more areas on said film (200), and
- a temperature regulating arrangement (220) arranged on said substrate (201) and configured to regulate the temperature distribution across said film (200) by selectively generating heat at one or more areas of said film (200) and/or by selectively generating (a) cooling flux(es) at one or more areas of said film (200).

2. The thermal management film (200) according to claim 1, wherein the temperature sensing arrangement (210) comprises at least one sensing element (211a-211c) formed by at least one material that has a temperature dependent material property and a plurality of monitoring circuits (212a-212c), arranged at predefined monitoring positions (230a-230c) that are spaced apart from each other over the substrate (201), wherein the monitoring circuits (211a-211c) are configured to monitor a parameter associated with the temperature dependent material property of the material at each monitoring position (230a-230c), such that temperature information at each monitoring position (230a-230c) is obtained.

3. The thermal management film (200) according to claim 2, wherein the temperature regulating arrangement (220) comprises a plurality of resistive heating elements (221a-221c) arranged at each monitoring position (230a-230c), the resistive heating elements (221a-221c) being configured to generate heat at one or more areas of said film (200) by applying an electrical current(s) to pass through the resistive heating elements (221a-221c).

4. The thermal management film (200) according to claim 3, wherein the resistive heating elements (221a-221c) are formed by resistive circuits utilizing the plurality of monitoring circuits (212a-212c).

5. The thermal management film (200) according to any one of claims 2-4, wherein the temperature regulating arrangement (220) further comprises a plurality of thermoelectric elements (222a-222c) arranged at each monitoring position (230a-230c), the thermoelectric elements (222a-222c) being configured to generate (a) cooling flux(es) at one or more areas of said film (200) by applying electrical currents to pass through the thermoelectric elements (222a-222c).

6. The thermal management film (200) according to claim 5, when dependent on claims 3-4, wherein the plurality of the thermoelectric elements (222a-222c) is connectable to the plurality of resistive heating elements (221a-221c), and wherein the thermoelectric elements (222a-222c) are adapted to be connected to one or more selected resistive heating elements (221a-221c) when electrical currents are generated through Seebeck effect, such that the electric currents are transferred to the one or more selected resistive heating elements (221a-221c).

7. The thermal management film (200) according to any one of the preceding claims, wherein the substrate (201) is formed by a polymer-based material.

8. The thermal management film (200) according to any one of the preceding claims, wherein the substrate has a thickness less than 1mm.

9. A battery cell (311), comprising:
- an electrode stack (319) comprising at least one surface (312')
- a battery casing assembly (320) enclosing the electrode stack (319), and
- the thermal management film (200) according to any one of claims 1-8,
- wherein the thermal management film (200) is arranged to be abutted against the at least one surface (312') of the electrode stack (319).

10. The battery cell according to claim 9, when dependent on claim 2, wherein the thermal management film (200) further comprises a connection portion (250) in which the output ends (212a'-212c') of plurality of the monitoring circuits (212a-212c) are arranged, and wherein the battery casing assembly (320) comprises a battery cap (321) having an opening (322) through which the connection portion (250) can be accessed.

11. A battery system (300) comprising:
- at least one battery cell (311) according to claim 10,
- a battery management unit (400) configured to monitor a temperature distribution across said at least one surface (312') of said at least one battery cell (311) by use of information related to the temperature associated parameter detected by the thermal management film (200),
- wherein the battery management unit (400) comprises processing circuitry (402) communicatively connectable to the output ends (212a'-212c') of the monitoring circuits (212a-212c).

12. The battery system (300) according to claim 11, when dependent on claims 3-4, the battery system (300) further comprising:
- a power source (350) configured to provide (an) electrical current(s) to pass through one or more resistive heating elements (221a-221c), such that heat is generated at one or more areas of said film (200),
- wherein each one of the resistive heating elements (221a-221c) comprises an input end (221a'-221c') and an output end (221a'-221c'), arranged at the connection portion (250) of the thermal management film (200),
- wherein the power source (350) is electrically connectable to the input and output ends (221a'-221c') of the resistive heating element (221a-221c)

13. The battery system (300) according to any one of claims 11-12, when dependent on any one of claims 5-6, the battery system (300) further comprising:
- a power source (350) configured to provide (an) electrical current(s) to pass through one or more thermoelectric elements (222a-222c), such that (a) cooling flux(es) is/are generated at one or more areas of said film (200),
- wherein each one of the thermoelectric elements (222a-222c) comprises an input end (222a'-222c') and an output end (222a'-222c'), arranged at the connection portion (250) of the thermal management film (200),
- wherein the power source (350) is electrically connectable to the input and output ends (222a'-222c') of the thermoelectric elements (222a-222c)

14. A vehicle (100) comprising a battery system (300) according to any one of claims 11-13

15. A computer-implemented method of regulating a temperature of an electrical device by means of a thermal management film (200), the electrical device comprising at least one surface, the thermal management film (200) being arranged to be abutted against the at least one surface of the electrical device, the thermal management film (200) comprising:
- a substrate (201),
- a temperature sensing arrangement (210) arranged on said substrate (201) and configured to detect a temperature associated parameter at one or more areas on said film (200), and
- a temperature regulating arrangement (220) arranged on said substrate (201) and configured to regulate the temperature across said film (200) by selectively generating heat at one or more area of said film (200) and/or by selectively generating (a) cooling flux(es) at one or more area of said film (200),
the method comprising:
- detecting (S1), by processing circuitry (402) of a computer system (400), a temperature distribution across said film (200),
- regulating (S2), by processing circuitry (402) of the computer system (400), the temperature of one or more area of said surface of the electrical device by generating heat at one or more area of said film (200) and/or by generating (a) cooling flux(es) at one or more area of said film (200) and on the basis of the detected temperature distribution across said film (200).
